# EUROPEAN PATENT SPECIFICATION

(11) **EP 4 383 134 B1**
(45) Date of publication and mention of the grant of the patent: **02.09.2026**
(21) Application number: 23195852.1
(22) Date of filing: 07.09.2023
(51) Int. Cl.: G06N 3/0455, G06N 3/08, G06F 17/14, G06F 17/18

(54) **SYSTEM AND METHOD FOR GENERATING SYNTHETIC DATA WITH DOMAIN ADAPTABLE FEATURES**
SYSTEM UND VERFAHREN ZUR ERZEUGUNG SYNTHETISCHER DATEN MIT DOMÄNENANPASSBAREN MERKMALEN
SYSTÈME ET PROCÉDÉ DE GÉNÉRATION DE DONNÉES SYNTHÉTIQUES AVEC DES CARACTÉRISTIQUES ADAPTABLES DE DOMAINE

(30) Priority: 27.10.2022 IN 202221061234
(43) Date of publication of application: 12.06.2024
(73) Proprietor: Tata Consultancy Services Limited, Maharashtra (IN)
(72) Inventor: BANDYOPADHYAY, SOMA, 700160 Kolkata (IN); DATTA, ANISH, 700160 Kolkata (IN); BHAUMIKSACHAN, CHIRABRATA, 700091 Kolkata (IN); CHAKRAVARTY, TAPAS, 700160 Kolkata (IN); PAL, ARPAN, 700160 Kolkata (IN); PANSE, RIDDHI, 560066 Bangalore (IN); SABIR, MUDASSIR ALI, 560066 Bangalore (IN)
(74) Representative: Goddar, Heinz J.

(56) References cited:
- LEE SANG MIN ET AL: "Application of domain-adaptive convolutional variational autoencoder for stress-state prediction", KNOWLEDGE-BASED SYSTEMS, ELSEVIER, AMSTERDAM, NL, vol. 248, 22 April 2022 (2022-04-22), XP087062912, ISSN: 0950-7051, [retrieved on 20220422], DOI: 10.1016/J.KNOSYS.2022.108827
- DIXIT SONAL ET AL: "Intelligent Condition-Based Monitoring of Rotary Machines With Few Samples", IEEE SENSORS JOURNAL, IEEE, USA, vol. 20, no. 23, 9 July 2020 (2020-07-09), pages 14337 - 14346, XP011819266, ISSN: 1530-437X, [retrieved on 20201104], DOI: 10.1109/JSEN.2020.3008177

## Description

### CROSS-REFERENCE TO RELATED APPLICATIONS AND PRIORITY

The present application claims priority from Indian patent application number 202221061234, filed on October 27, 2022.

### TECHNICAL FIELD

The disclosure herein generally relates to the field of synthetic data generation and more specifically, to a method and system for generating synthetic data with domain adaptable features using a neural network.

### BACKGROUND

Synthetic data is an annotated information that computer simulations or algorithms generate as an alternative to real-world data. The synthetic data is created in digital world rather than collected from or measured in the real world. The synthetic data generation has been around in one form or another for decades.

Data synthesis for target domain using a small seed of source domain data is an important need because many a times getting the data (seed data) for the target domain is a challenge. However, there are possibilities to get a relation about the features of the source domain to the target domain, for example source domain is normal state and target domain is any of the fault progressed state where 4^{th} order moment or kurtosis increases by a certain known factor. Existing data generation models are not using domain adaptable features for a target domain. For example, a normal state of machinery data is easy to obtain however when the machine reaches to its final faulty state getting the data of intermediate faulty states representing different states/domains are difficult to obtain. Document "Application of domain-adaptive convolutional variational autoencoder for stressstate prediction", discloses that applying data-driven methods such as deep learning in material mechanics is challenging because producing a sufficiently large, labeled dataset is costly resource-wise. This document outlines an approach to overcome this difficulty by transferring knowledge from a source domain of finite element-analysis data to a target domain of real-world test-specimen images so that a model capable of accurate and robust predictions in both domains may be constructed. To achieve this transfer of knowledge, discrepancy-based unsupervised domain adaptation is adopted into a convolutional variational autoencoder structure. To evaluate the approach of this document, a four-point bending experiment was conducted on 6061 aluminum alloy and 316 stainless steel to produce 550 unlabeled target domain data images. The same bending situation was analyzed using the finite-element method implemented in the commercial software package ABAQUS to produce 6000 labeled, source-domain data images. The domain-adaptive convolutional variational autoencoder of this document was trained using the maximum mean discrepancy method on the target- and the source-domain data. The predictions using the domain-adapted convolutional variational autoencoder were relatively more accurate than those using the model trained only on the source domain. It is expected that the approach of this document can address the scarcity of labeled data in various applications of material mechanics and provide a base technology for the development of various data-driven approaches. Document "Intelligent Condition-Based Monitoring of Rotary Machines With Few Samples", discloses a fault diagnosis framework to tackle the issue of limited samples in the training dataset. In the framework, firstly, new training samples termed as synthetic samples are generated to increase the size of the dataset. After that, both original and synthetic samples are stacked, and the classifier model is trained. This document proposes a modified Conditional Variational Autoencoder (CVAE) to generate synthetic samples. In the proposed CVAE of this document, centroid loss is added to the standard CVAE objective function. This loss directs generated samples to remain close with the centroid of their respective class, which helps in generating synthetic samples quite similar to the original samples. This document also investigates the performance of proposed model in the presence of noise and effect of transformed data and original data.

### SUMMARY

Embodiments of the disclosure present technological improvements as solutions to one or more of the above-mentioned technical problems recognized by the inventors in conventional systems. For example, in one embodiment, a method and system for generating synthetic data with domain adaptable features using a neural network is provided. The invention is set out in the independent claims. Preferred embodiments are defined by the dependent claims. Further aspects and examples are provided for facilitating the understanding of the invention.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of an exemplary system for generating synthetic data with domain adaptable features using a neural network, in accordance with some embodiments of the present disclosure.
FIG. 2 is a graphical representation to illustrate a trend of maximum peak amplitude (MPA) in frequency domain for original data and synthetic data, in accordance with some embodiments of the present disclosure.
FIG. 3 is a graphical representation to illustrate a trend of power spectral density for original data and synthetic data, in accordance with some embodiments of the present disclosure.
FIG. 4 is a graphical representation to illustrate a trend of relative change for original data and synthetic data, in accordance with some embodiments of the present disclosure.
FIG. 5 is a flow diagram to illustrate a method for generating synthetic data with domain adaptable features using neural network, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

The embodiments herein provide a method and system for generating synthetic data with domain adaptable features using neural network. Herein, the neural network based model is used to generate high quality data with adaptation of the domain specific features.

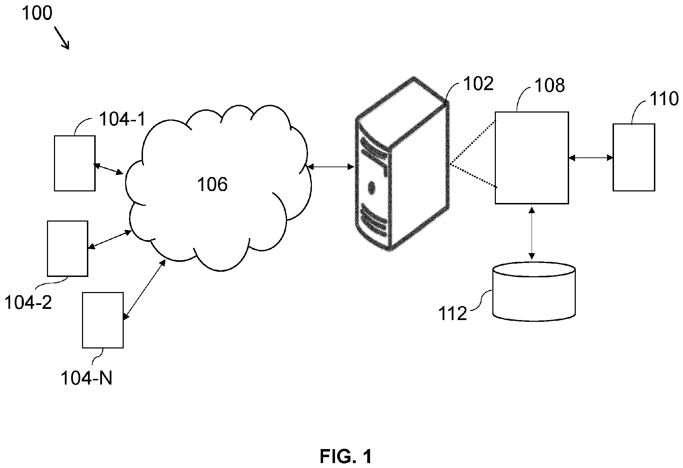

Referring now to the drawings, and more particularly to FIG. 1 through FIG. 5, where similar reference characters denote corresponding features consistently throughout the figures, there are shown preferred embodiments and these embodiments are described in the context of the following exemplary system and/or method.

FIG. 1 illustrates a block diagram of a system (100) for generating synthetic data with domain adaptable features using neural network, in accordance with an example embodiment. Although the present disclosure is explained considering that the system (100) is implemented on a server, it may be understood that the system (100) may comprise one or more computing devices (102), such as a laptop computer, a desktop computer, a notebook, a workstation, a cloud-based computing environment and the like. It will be understood that the system (100) may be accessed through one or more input/output interfaces 104-1, 104-2... 104-N, collectively referred to as I/O interface (104). Examples of the I/O interface (104) may include, but are not limited to, a user interface, a portable computer, a personal digital assistant, a handheld device, a smartphone, a tablet computer, a workstation, and the like. The I/O interface (104) are communicatively coupled to the system (100) through a network (106).

In an embodiment, the network (106) may be a wireless or a wired network, or a combination thereof. In an example, the network (106) can be implemented as a computer network, as one of the different types of networks, such as virtual private network (VPN), intranet, local area network (LAN), wide area network (WAN), the internet, and such. The network (106) may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network (106) may include a variety of network devices, including routers, bridges, servers, computing devices, storage devices. The network devices within the network (106) may interact with the system (100) through communication links.

The system (100) supports various connectivity options such as BLUETOOTH^{®}, USB, ZigBee, and other cellular services. The network environment enables connection of various components of the system (100) using any communication link including Internet, WAN, MAN, and so on. In an exemplary embodiment, the system (100) is implemented to operate as a standalone device. In another embodiment, the system (100) may be implemented to work as a loosely coupled device to a smart computing environment. Further, the system (100) comprises at least one memory (110) with a plurality of instructions, one or more databases (112), and one or more hardware processors (108) which are communicatively coupled with the at least one memory (110) to execute a plurality of instructions. The components and functionalities of the system (100) are described further in detail.

The one or more I/O interfaces (104) of the system (100) is configured to receive a predefined amount of seed data from a source domain as an input data. Herein the received input data is multivariate in nature. The predefined amount of seed data from a normal state of a predefined machinery is considered as an input data. Wherein the normal state, which is an initial stage of the source domain, consists of a set of features with a certain range of values. Whereas a target domain is a change of state defined by a set of context features. It is considered as a fault progression state where the fault severity increases gradually.

The system (100) is configured to analyze the received input data to determine one or more characteristics of a domain property with respect to the source domain and the target domain. The one or more characteristics of the domain property comprising a physics based property, a statistical property, and a probabilistic property.

In case of the predefined machinery reaches from normal to complete failure state, fault severity associating stiffness is a domain property. The system (100) measures change of stiffness impacting different statistical features like maximum amplitude of taking Fast Fourier Transform (FFT) of the machine vibration data.

The system (100) is configured to identify a variation of one or more domain adaptable features along with variation factors applied on the source domain. The identified variation represents corresponding adapting features in target domain based on the determined one or more characteristics of a domain property. The one or more domain adaptable features includes maximum peak amplitude (MPA) of Fast Fourier Transform (FFT), a power spectral density derived on the FFT of the data, and moments based on difference signal like 4^{th} order Figure of Merit (FM4).

Every change in the target domain is associated with an adaptation of variation of the one or more domain adaptable features in the source domain. The variation of the one or more domain adaptable features is obtained by mapping the physics-based property of source domain with the probabilistic and statistical property of the source domain.

Further, the system (100) determines a ratio factor to express variation in at least one of one or more features of the target domain in comparison with the input domain. The ratio factor represents the variation of the features from the old state to a new state. The ratio factor is determined as an output of a domain knowledge extractor having an option of a trend analysis module of the system (100) relating to domain property & probabilistic property. The domain property is the contributor of cause and feature changes with ratio factor is the effect.

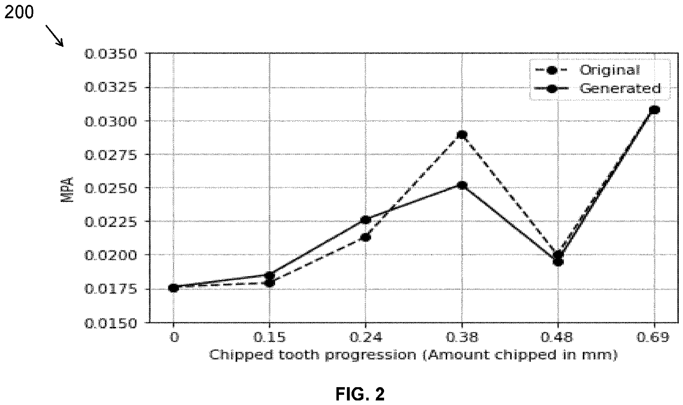

Referring FIG. 2, a graphical representation (200), establishing a trend curve based on statistical/probabilistic features on how the input data progresses from one state to a completely new state. For trend analysis, a maximum peak amplitude (MPA) in frequency domain is used as the feature to observe the trend of fault progression for original and the generated data. A trend is observed which is very similar for the generated data with respect to the original data.

In one instance, for the trend analysis of the cause effect mapping, the source domain, and the target domain are given as two final sets like normal and complete failure. A factor *r* to be defined which represents the variation of the feature from the old state to new state. For example, if feature *F* has value *a* in state *A* and value *2a* in new state *B,* then the value of r will be 2.

The system (100) is configured to generate an output data in the target domain based on the identified each of the one or more domain adaptable features using a neural network based model. The factor of adaptation is evaluated by a trend analyzer of the system (100). The trend analyzer of the system (100) does cause-effect mapping which maps the change of physical property and its impact into different statistical features. A generative learning using a regularized VAE (variational auto encoder) towards adaptable features is used.

The neural network based model taking predefined amount of source domain data as input, optimizes objective functions with one or more regularization to minimize loss or errors in terms of the one or more domain adaptable features. The loss function of the system (100) is defined as: $Loss = {MSE}_{Loss} \left(x,x′\right) + {KLD}_{Loss} + {\sum }_{i = 1}^{n} MSE \left({f}_{i}∗{DAF}_{i}\left(x\right),{DAF}_{i}\left(x′\right)\right)$ wherein, *x* is the input data, *x'* is reconstructed data, MSE - mean square error loss, *KLD_{Loss}* is K-L divergence Loss, *fᵢ* is the factor of domain adaptable feature (*DAFᵢ*). ${DAF}_{i} = > FFT , FM 4$ wherein the reduction of Fast Fourier Transform (FFT) and FM4 with respect to source domain and generated target domain.

The neural network based model is a variational auto-encoder with a modified optimization function to adapt the one or more domain adaptable features to minimize the loss against the source domain data and generated the target domain data. The variational auto-encoder based generative model with customized regularization of the loss function generates the data by taking a predefined amount of data from source domain, adapts the characteristic given as cause-effect mapping or with a certain factor relating the source domain feature.

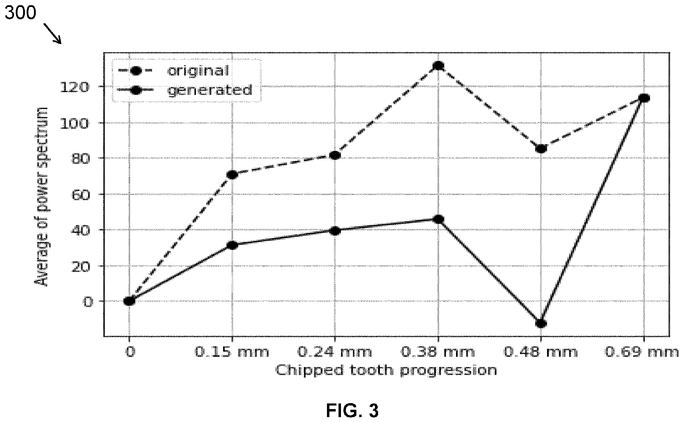

Referring FIG. 3, a graphical representation (300) to illustrate trend of power spectral density of Fast Fourier Transform (FFT) for original data and synthetic data, in accordance with some embodiments of the present disclosure. Wherein the normal state of machinery is an input domain and chipped tooth fault progressed to new states as an output domain. For initial experimentation, a feature is selected as a maximum peak amplitude (MPA) in frequency domain, power spectral density of FFT. Herein, an optimization is performed considering minimum number of features impacting multiple domain adaptable features.

It would be appreciated that the domain property gets modified when domain changes from the source domain to the target domain. For example, fault severity relates to stiffness which is a physical property. The domain property is mapped to different statistical, probabilities, signal property based features relating to corresponding changes in physical property like stiffness.

Furthermore, an objective function of the learning of neural model is modified such that minimum number of regularized features covers maximum number of domain adaptable features. Original and generated data of the MPA with the percentage variation of the generated intermediate chipped tooth fault state is shown below in table 1. The percentage variation of the MPA feature is 2.5 - 13.7% of the generated data with respect to the original data. The relationship of the feature of the generated data of different intermediate fault states resembles that of the original data.

**Table 1**

| **Fault State** | **Factor taken as input for MPA** | **Maximum peak amplitude in frequency domain (MPA)** | | |
|---|---|---|---|---|
| | | **Original data** | **Generated data** | **Percentage variation** |
| chip5a (0.15 mm) | 1.015 | 0.0179 | 0.0185 | 3.3 % |
| chip4a (0.24 mm) | 1.2 | 0.0213 | 0.0226 | 6.1 % |
| chip3a (0.38 mm) | 1.65 | 0.0290 | 0.0252 | 13.7 % |
| chip2a (0.48 mm) | 1.14 | 0.0200 | 0.0195 | 2.5 % |

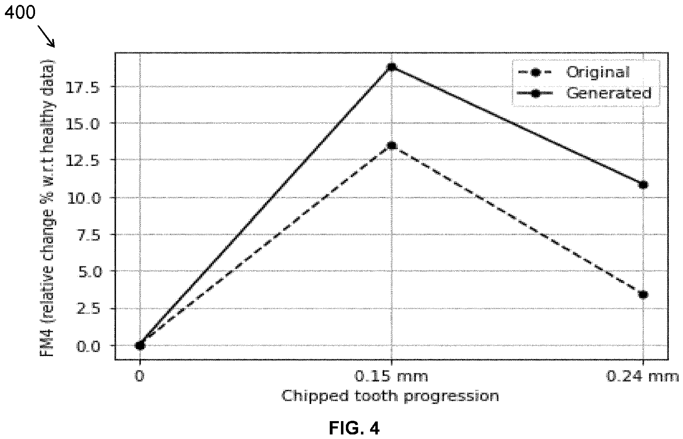

Referring FIG. 4, a graphical representation (400) to illustrate trend of relative change for original data and synthetic data, in accordance with some embodiments of the present disclosure. Wherein generating data for intermediate states taking FM4 as the domain adaptable feature completed for two states i.e., chip5a (0.15 mm) and chip4a (0.24 mm). Herein, the relative change of FM4 with respect to healthy data is plotted for the original and generated data. The trend of the feature in both states looks similar for the original and generated data.

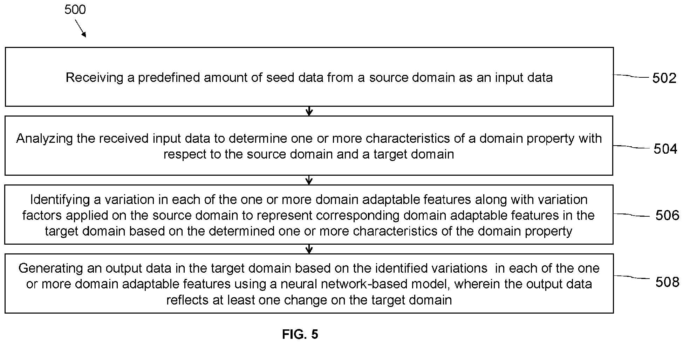

Referring FIG. 5, a flow diagram (500), to illustrate a processor-implemented method for generating synthetic data with domain adaptable features using a neural network, in accordance with some embodiments of the present disclosure. Initially, at step (502), receiving a predefined amount of input data from a source domain. Herein, the source domain is in a normal state.

At the next step (504), analyzing the received input data to determine one or more characteristics of a domain property with respect to the source domain and a target domain. The one or more characteristics of the domain property comprising a physics based property, a statistical property, and a probabilistic property.

At the next step (506), identifying a variation of the one or more domain adaptable features along with variation factors applied on the source domain to represent corresponding the one or more domain adaptable features in the target domain based on the determined one or more characteristics of the domain property. Wherein, every change in the target domain is associated with an adaptation of variation of the one or more domain adaptable features in the source domain. The variation of the one or more domain adaptable features is obtained by mapping the physics-based property of the source domain with the probabilistic property of the source domain.

At the last step (508), generating an output data in the target domain based on the identified each of the one or more domain adaptable features using a neural network based model. The neural network based model is a variational autoencoder with a modified optimization function to adapt the one or more domain adaptable features to minimize the loss against input and generated output data. wherein the neural network based model taking predefined amount of source domain data as input optimizes objective functions with one or more regularization to minimize loss or errors in terms of the one or more domain adaptable features.

### Experiment:

Herein, for initial experimentation, the system chooses the feature as maximum peak amplitude (MPA) in frequency domain. Evidence obtained from University of Connecticut (*UoC*) gear fault dataset, as fault progresses the maximum peak amplitude (MPA) also increases. The generated data with adapted domain feature with peak amplitude 1.5 times as that of normal data (r=1.5).

The written description describes the subject matter herein to enable any person skilled in the art to make and use the embodiments. The scope of the subject matter embodiments is defined by the claims.

The embodiments of present disclosure herein address the problem of synthetic data generation. The embodiments herein provide a method and system for generating synthetic data with domain adaptable features using a neural network. Herein, the neural network based model is used to generate high quality data with adaptation of the domain specific features.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computerusable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (500) comprising:
receiving (502), via one or more input/output interface, a predefined amount of input data from a source domain, wherein the source domain is in a normal state of a machinery, wherein the normal state consists of a set of features with a certain range of values, wherein the predefined amount of input data is multivariate in nature;
analyzing (504), via one or more hardware processors, the received input data to determine one or more characteristics of a domain property with respect to the source domain and a target domain, wherein the one or more characteristics of the domain property comprising a physics based property being a stiffness, a statistical property, and a probabilistic property, wherein the target domain is a change of state defined by a set of context features and wherein the target domain is a fault progression state, wherein a fault severity associated with the stiffness increases gradually, and measuring change of the stiffness impacting different statistical features such as a maximum amplitude of computing a Fast Fourier Transform, FFT, of a machine vibration data;
identifying (506), via the one or more hardware processors, a variation in each of one or more domain adaptable features associated with variation factors applied on the source domain to represent the corresponding one or more domain adaptable features in the target domain based on the determined one or more characteristics of the domain property, wherein the variation of the one or more domain adaptable features is obtained by mapping the physics-based property of the source domain with the statistical and probabilistic property of the source domain;
determining, via the one or more hardware processors, a ratio factor to express the variation in each of the one or more domain adaptable features, wherein the ratio factor represents the variation of the one or more domain adaptable features from an old state to a new state, wherein the ratio factor is determined as an output of a domain knowledge extractor having a trend analysis relating to the domain property and the probabilistic property; and
generating (508), via the one or more hardware processors, an output data in the target domain based on the identified variations in each of the one or more domain adaptable features using a neural network based model, wherein the output data reflects at least one change on the target domain, wherein the at least one change in the target domain is associated with an adaptation of the identified variations of the one or more domain adaptable features in the source domain, wherein the neural network based model taking a predefined amount of source domain data as input optimizes objective functions with one or more regularization to minimize losses or errors in terms of the one or more domain adaptable features, wherein a loss function is defined as: $Loss = {MSE}_{Loss} \left(x,x′\right) + {KLD}_{Loss} + {\sum }_{i = 1} MSE \left({f}_{i}∗{DAF}_{i}\left(x\right),{DAF}_{i}\left(x′\right)\right)$
wherein, *x* is the input data, *x'* is reconstructed data, MSE is mean square error loss, *KLD_{Loss}* is K-L divergence Loss, *fᵢ* is the factor of domain adaptable feature (*DAFᵢ*). ${DAF}_{i} = > FFT , FM 4$
wherein reduction of the FFT and Figure of Merit, FM4, with respect to source domain and generated target domain, wherein the neural network-based model is a variational auto-encoder with a modified optimization function to adapt the one or more domain adaptable features to minimize the loss function against input and generated output data for the target domain,
wherein the one or more domain adaptable features include a maximum peak amplitude of the FFT, a power spectral density derived on the FFT of the machine vibration data, moments based on a difference signal such as 4^{th} order FM4, and the normal state of the machinery is an input domain and a chipped tooth fault progressed to new states as an output domain.

2. A system (100) comprising:
an input/output interface (104) to receive a predefined amount of input data from a source domain, wherein the source domain is in a normal state of a machinery, wherein the normal state consists of a set of features with a certain range of values, wherein the predefined amount of input data is multivariate in nature;
a memory (110) in communication with the one or more hardware processors (108), wherein the one or more hardware processors (108) are configured to execute programmed instructions stored in the memory to:
analyze the received input data to determine one or more characteristics of a domain property with respect to the source domain and a target domain, wherein the one or more characteristics of the domain property comprising a physics based property being a stiffness, a statistical property, and a probabilistic property, wherein the target domain is a change of state defined by a set of context features and wherein the target domain is a fault progression state, wherein a fault severity associated with the stiffness increases gradually , and measuring change of the stiffness impacting different statistical features such as a maximum amplitude of computing a Fast Fourier Transform, FFT, of a machine vibration data;
identify a variation in each of one or more domain adaptable features associated with variation factors applied on the source domain to represent the corresponding one or more domain adaptable features in the target domain based on the determined one or more characteristics of the domain property, wherein the variation of the one or more domain adaptable features is obtained by mapping the physics-based property of the source domain with the statistical and probabilistic property of the source domain;
determine a ratio factor to express the variation in each of the one or more domain adaptable features, wherein the ratio factor represents the variation of the one or more domain adaptable features from an old state to a new state, wherein the ratio factor is determined as an output of a domain knowledge extractor having a trend analysis relating to the domain property and the probabilistic property; and
generate an output data in the target domain based on the identified variations in each of the one or more domain adaptable features using a neural network based model, wherein the output data reflects at least one change on the target domain, wherein the at least one change in the target domain is associated with an adaptation of the identified variations of the one or more domain adaptable features in the source domain, wherein the neural network based model taking a predefined amount of source domain data as input optimizes objective functions with one or more regularization to minimize losses or errors in terms of the one or more domain adaptable features, wherein a loss function is defined as: $Loss = {MSE}_{Loss} \left(x,x′\right) + {KLD}_{Loss} + {\sum }_{i = 1} MSE \left({f}_{i}∗{DAF}_{i}\left(x\right),{DAF}_{i}\left(x′\right)\right)$
wherein, *x* is the input data, *x'* is reconstructed data, MSE is mean square error loss, *KLD_{Loss}* is K-L divergence Loss, *fᵢ* is the factor of domain adaptable feature (*DAFᵢ*). ${DAF}_{i} = > FFT , FM 4$
wherein reduction the FFT and Figure of Merit, FM4, with respect to source domain and generated target domain, wherein the neural network-based model is a variational auto-encoder with a modified optimization function to adapt the one or more domain adaptable features to minimize the loss function against input and generated output data for the target domain,
wherein the one or more domain adaptable features include a maximum peak amplitude of the FFT, a power spectral density derived on the FFT of the machine vibration data, moments based on a difference signal such as 4^{th} order FM4, and the normal state of the machinery is an input domain and a chipped tooth fault progressed to new states as an output domain.

3. One or more non-transitory machine-readable information storage mediums comprising one or more instructions which when executed by one or more hardware processors cause:
receiving, via one or more input/output interface, a predefined amount of input data from a source domain, wherein the source domain is in a normal state of a machinery, wherein the normal state consists of a set of features with a certain range of values, wherein the predefined amount of input data is multivariate in nature;
analyzing the received input data to determine one or more characteristics of a domain property with respect to the source domain and a target domain, wherein the one or more characteristics of the domain property comprising a physics based property being a stiffness, a statistical property, and a probabilistic property, wherein the target domain is a change of state defined by a set of context features and wherein the target domain is a fault progression state, wherein a fault severity associated with the stiffness increases gradually, and measuring change of the stiffness impacting different statistical features such as a maximum amplitude of computing Fast Fourier Transform, FFT, of a machine vibration data;
identifying a variation in each of one or more domain adaptable features associated with variation factors applied on the source domain to represent the corresponding one or more domain adaptable features in the target domain based on the determined one or more characteristics of the domain property, wherein the variation of the one or more domain adaptable features is obtained by mapping the physics-based property of the source domain with the statistical and probabilistic property of the source domain;
determining a ratio factor to express the variation in each of the one or more domain adaptable features, wherein the ratio factor represents the variation of the one or more domain adaptable features from an old state to a new state, wherein the ratio factor is determined as an output of a domain knowledge extractor having a trend analysis relating to the domain property and the probabilistic property; and
generating an output data in the target domain based on the identified variations in each of the one or more domain adaptable features using a neural network based model, wherein the output data reflects at least one change on the target domain, wherein the at least one change in the target domain is associated with an adaptation of the identified variations of the one or more domain adaptable features in the source domain, wherein the neural network based model taking a predefined amount of source domain data as input optimizes objective functions with one or more regularization to minimize losses or errors in terms of the one or more domain adaptable features, wherein a loss function is defined as: $Loss = {MSE}_{Loss} \left(x,x′\right) + {KLD}_{Loss} + {\sum }_{i = 1} MSE \left({f}_{i}∗{DAF}_{i}\left(x\right),{DAF}_{i}\left(x′\right)\right)$
wherein, *x* is the input data, *x'* is reconstructed data, MSE is mean square error loss, *KLD_{Loss}* is K-L divergence Loss, *fᵢ* is the factor of domain adaptable feature (*DAFᵢ*). ${DAF}_{i} = > FFT , FM 4$
wherein reduction of the FFT and Figure of Merit, FM4, with respect to source domain and generated target domain, wherein the neural network-based model is a variational auto-encoder with a modified optimization function to adapt the one or more domain adaptable features to minimize the loss function against input and generated output data for the target domain,
wherein the one or more domain adaptable features include a maximum peak amplitude of the FFT, a power spectral density derived on the FFT of the machine vibration data, moments based on a difference signal such as 4^{th} order FM4, and the normal state of the machinery is an input domain and a chipped tooth fault progressed to new states as an output domain.

## Patentansprüche

1. Prozessorimplementiertes Verfahren (500), umfassend:
Empfangen (502), über eine oder mehrere Eingabe-/Ausgabe-Schnittstellen, einer vordefinierten Menge von Eingabedaten von einer Quelldomäne, wobei sich die Quelldomäne in einem Normalzustand einer Maschine befindet, wobei der Normalzustand aus einem Satz von Merkmalen mit einem bestimmten Wertebereich besteht, wobei die vordefinierte Menge von Eingabedaten multivariater Natur ist;
Analysieren (504), über einen oder mehrere Hardwareprozessoren, der empfangenen Eingabedaten, um eine oder mehrere Eigenschaften einer Domäneneigenschaft in Bezug auf die Quelldomäne und eine Zieldomäne zu bestimmen, wobei die eine oder die mehreren Eigenschaften der Domäneneigenschaft eine physikbasierte Eigenschaft umfassen, die eine Steifigkeit, eine statistische Eigenschaft und eine probabilistische Eigenschaft ist, wobei die Zieldomäne eine Zustandsänderung ist, die durch einen Satz von Kontextmerkmalen definiert ist, und wobei die Zieldomäne ein Fehlerprogressionszustand ist, wobei eine Fehlerschwere, die mit der Steifigkeit assoziiert ist, allmählich zunimmt, und Messen einer Änderung der Steifigkeit, die auf verschiedene statistische Merkmale einwirkt, wie etwa eine maximale Amplitude einer Berechnung einer schnellen Fourier-Transformation, FFT, von Maschinenvibrationsdaten;
Identifizieren (506), über den einen oder die mehreren Hardwareprozessoren, einer Variation in jedem von einem oder mehreren domänenanpassbaren Merkmalen, die mit Variationsfaktoren assoziiert sind, die auf die Quelldomäne angewendet werden, um das entsprechende eine oder die entsprechenden mehreren domänenanpassbaren Merkmale in der Zieldomäne basierend auf der bestimmten einen oder den bestimmten mehreren Eigenschaften der Domäneneigenschaft darzustellen, wobei die Variation des einen oder der mehreren domänenanpassbaren Merkmale durch Abbilden der physikbasierten Eigenschaft der Quelldomäne auf die statistische und probabilistische Eigenschaft der Quelldomäne erhalten wird;
Bestimmen, über den einen oder die mehreren Hardwareprozessoren, eines Verhältnisfaktors, um die Variation in jedem des einen oder der mehreren domänenanpassbaren Merkmale auszudrücken, wobei der Verhältnisfaktor die Variation des einen oder der mehreren domänenanpassbaren Merkmale von einem alten Zustand zu einem neuen Zustand darstellt, wobei der Verhältnisfaktor als eine Ausgabe eines Domänenwissensextraktors mit einer Trendanalyse in Bezug auf die Domäneneigenschaft und die probabilistische Eigenschaft bestimmt wird; und
Erzeugen (508), über den einen oder die mehreren Hardwareprozessoren, von Ausgabedaten in der Zieldomäne basierend auf den identifizierten Variationen jedem des einen oder der mehreren domänenanpassbaren Merkmale unter Verwendung eines auf einem neuronalen Netzwerk basierenden Modells, wobei die Ausgabedaten mindestens eine Änderung in der Zieldomäne widerspiegeln, wobei die mindestens eine Änderung in der Zieldomäne mit einer Anpassung der identifizierten Variationen des einen oder der mehreren domänenanpassbaren Merkmale in der Quelldomäne assoziiert ist, wobei das auf einem neuronalen Netzwerk basierende Modell, das eine vordefinierte Menge von Quelldomänendaten als Eingabe nimmt, Zielfunktionen mit einer oder mehreren Regularisierungen optimiert, um Verluste oder Fehler in Bezug auf das eine oder die mehreren domänenanpassbaren Merkmale zu minimieren, wobei eine Verlustfunktion definiert ist als: $Verlust = {MSE}_{Verlust} \left(x,x′\right) + {KLD}_{Verlust} + {\sum }_{i = 1}^{n} MSE \left({f}_{i}∗{DAF}_{i}\left(x\right),{DAF}_{i}\left(x′\right)\right)$
wobei *x* die Eingabedaten sind, *x*' rekonstruierte Daten sind, MSE ein mittlerer quadratischer Fehlerverlust ist, *KLD_{Verlust}* K-L-Divergenzverlust ist, *fᵢ* der Faktor des domänenanpassbaren Merkmals ist (*DAFᵢ*). ${DAF}_{i} = > FFT , FM 4$
wobei die Reduzierung der FFT und der Gütezahl, FM4, in Bezug auf die Quelldomäne und die erzeugte Zieldomäne ist, wobei das auf einem neuronalen Netzwerk basierende Modell ein Variationsautocodierer mit einer modifizierten Optimierungsfunktion ist, um das eine oder die mehreren domänenanpassbaren Merkmale anzupassen, um die Verlustfunktion gegenüber Eingabe- und erzeugten Ausgabedaten für die Zieldomäne zu minimieren,
wobei das eine oder die mehreren domänenanpassbaren Merkmale eine maximale Spitzenamplitude der FFT, eine Leistungsspektraldichte, die auf der FFT der Maschinenvibrationsdaten abgeleitet ist, Momente basierend auf einem Differenzsignal wie etwa FM4 4· Ordnung beinhalten und der Normalzustand der Maschine eine Eingabedomäne ist und ein fehlgeschlagener Zahnfehler zu neuen Zuständen als eine Ausgabedomäne fortgeschritten ist.

2. System (100), umfassend:
eine Eingabe-/Ausgabe-Schnittstelle (104) zum Empfangen einer vordefinierten Menge von Eingabedaten von einer Quelldomäne, wobei sich die Quelldomäne in einem Normalzustand einer Maschine befindet, wobei der Normalzustand aus einem Satz von Merkmalen mit einem bestimmten Wertebereich besteht, wobei die vordefinierte Menge von Eingabedaten multivariater Natur ist;
einen Speicher (110) in Kommunikation mit dem einen oder den mehreren Hardwareprozessoren (108), wobei der eine oder die mehreren Hardwareprozessoren (108) konfiguriert sind, um programmierte Anweisungen auszuführen, die in dem Speicher gespeichert sind, um:
die empfangenen Eingabedaten zu analysieren, um eine oder mehrere Eigenschaften einer Domäneneigenschaft in Bezug auf die Quelldomäne und eine Zieldomäne zu bestimmen, wobei die eine oder die mehreren Eigenschaften der Domäneneigenschaft eine physikbasierte Eigenschaft umfassen, die eine Steifigkeit, eine statistische Eigenschaft und eine probabilistische Eigenschaft ist, wobei die Zieldomäne eine Zustandsänderung ist, die durch einen Satz von Kontextmerkmalen definiert ist, und wobei die Zieldomäne ein Fehlerprogressionszustand ist, wobei eine Fehlerschwere, die mit der Steifigkeit assoziiert ist, allmählich zunimmt, und Messen einer Änderung der Steifigkeit, die auf verschiedene statistische Merkmale einwirkt, wie etwa eine maximale Amplitude einer Berechnung einer schnellen Fourier-Transformation, FFT, von Maschinenvibrationsdaten;
eine Variation in jedem von einem oder mehreren domänenanpassbaren Merkmalen zu identifizieren, die mit Variationsfaktoren assoziiert sind, die auf die Quelldomäne angewendet werden, um das entsprechende eine oder die entsprechenden mehreren domänenanpassbaren Merkmale in der Zieldomäne basierend auf der bestimmten einen oder den bestimmten mehreren Eigenschaften der Domäneneigenschaft darzustellen, wobei die Variation des einen oder der mehreren domänenanpassbaren Merkmale durch Abbilden der physikbasierten Eigenschaft der Quelldomäne auf die statistische und probabilistische Eigenschaft der Quelldomäne erhalten wird;
einen Verhältnisfaktor zu bestimmen, um die Variation in jedem des einen oder der mehreren domänenanpassbaren Merkmale auszudrücken, wobei der Verhältnisfaktor die Variation des einen oder der mehreren domänenanpassbaren Merkmale von einem alten Zustand zu einem neuen Zustand darstellt, wobei der Verhältnisfaktor als eine Ausgabe eines Domänenwissensextraktors mit einer Trendanalyse in Bezug auf die Domäneneigenschaft und die probabilistische Eigenschaft bestimmt wird; und
Ausgabedaten in der Zieldomäne basierend auf den identifizierten Variationen in jedem des einen oder der mehreren domänenanpassbaren Merkmale unter Verwendung eines auf einem neuronalen Netzwerk basierenden Modells zu erzeugen, wobei die Ausgabedaten mindestens eine Änderung in der Zieldomäne widerspiegeln, wobei die mindestens eine Änderung in der Zieldomäne mit einer Anpassung der identifizierten Variationen des einen oder der mehreren domänenanpassbaren Merkmale in der Quelldomäne assoziiert ist, wobei das auf einem neuronalen Netzwerk basierende Modell, das eine vordefinierte Menge von Quelldomänendaten als Eingabe nimmt, Zielfunktionen mit einer oder mehreren Regularisierungen optimiert, um Verluste oder Fehler in Bezug auf das eine oder die mehreren domänenanpassbaren Merkmale zu minimieren, wobei eine Verlustfunktion definiert ist als: $Verlust = {MSE}_{Verlust} \left(x,x′\right) + {KLD}_{Verlust} + {\sum }_{i = 1}^{n} MSE \left({f}_{i}∗{DAF}_{i}\left(x\right),{DAF}_{i}\left(x′\right)\right)$
wobei *x* die Eingabedaten sind, *x*' rekonstruierte Daten sind, MSE ein mittlerer quadratischer Fehlerverlust ist, *KLD_{Verlust}* K-L-Divergenzverlust ist, *fᵢ* der Faktor des domänenanpassbaren Merkmals ist (*DAFᵢ*). ${DAF}_{i} = > FFT , FM 4$
wobei die Reduzierung der FFT und der Gütezahl, FM4, in Bezug auf die Quelldomäne und die erzeugte Zieldomäne ist, wobei das auf einem neuronalen Netzwerk basierende Modell ein Variationsautocodierer mit einer modifizierten Optimierungsfunktion ist, um das eine oder die mehreren domänenanpassbaren Merkmale anzupassen, um die Verlustfunktion gegenüber Eingabe- und erzeugten Ausgabedaten für die Zieldomäne zu minimieren,
wobei das eine oder die mehreren domänenanpassbaren Merkmale eine maximale Spitzenamplitude der FFT, eine Leistungsspektraldichte, die auf der FFT der Maschinenvibrationsdaten abgeleitet ist, Momente basierend auf einem Differenzsignal wie etwa FM4 4· Ordnung beinhalten und der Normalzustand der Maschine eine Eingabedomäne ist und ein fehlgeschlagener Zahnfehler zu neuen Zuständen als eine Ausgabedomäne fortgeschritten ist.

3. Ein oder mehrere nichtflüchtige maschinenlesbare Informationsspeichermedien, umfassend eine oder mehrere Anweisungen, die bei Ausführung durch einen oder mehrere Hardwareprozessoren Folgendes bewirken:
Empfangen, über eine oder mehrere Eingabe-/Ausgabe-Schnittstellen, einer vordefinierten Menge von Eingabedaten von einer Quelldomäne, wobei sich die Quelldomäne in einem Normalzustand einer Maschine befindet, wobei der Normalzustand aus einem Satz von Merkmalen mit einem bestimmten Wertebereich besteht, wobei die vordefinierte Menge von Eingabedaten multivariater Natur ist;
Analysieren der empfangenen Eingabedaten, um eine oder mehrere Eigenschaften einer Domäneneigenschaft in Bezug auf die Quelldomäne und eine Zieldomäne zu bestimmen, wobei die eine oder die mehreren Eigenschaften der Domäneneigenschaft eine physikbasierte Eigenschaft umfassen, die eine Steifigkeit, eine statistische Eigenschaft und eine probabilistische Eigenschaft ist, wobei die Zieldomäne eine Zustandsänderung ist, die durch einen Satz von Kontextmerkmalen definiert ist, und wobei die Zieldomäne ein Fehlerprogressionszustand ist, wobei eine Fehlerschwere, die mit der Steifigkeit assoziiert ist, allmählich zunimmt, und Messen einer Änderung der Steifigkeit, die auf verschiedene statistische Merkmale einwirkt, wie etwa eine maximale Amplitude einer Berechnung einer schnellen Fourier-Transformation, FFT, von Maschinenvibrationsdaten;
Identifizieren einer Variation in jedem von einem oder mehreren domänenanpassbaren Merkmalen, die mit Variationsfaktoren assoziiert sind, die auf die Quelldomäne angewendet werden, um das entsprechende eine oder die entsprechenden mehreren domänenanpassbaren Merkmale in der Zieldomäne basierend auf der bestimmten einen oder den bestimmten mehreren Eigenschaften der Domäneneigenschaft darzustellen, wobei die Variation des einen oder der mehreren domänenanpassbaren Merkmale durch Abbilden der physikbasierten Eigenschaft der Quelldomäne auf die statistische und probabilistische Eigenschaft der Quelldomäne erhalten wird;
Bestimmen eines Verhältnisfaktors, um die Variation in jedem des einen oder der mehreren domänenanpassbaren Merkmale auszudrücken, wobei der Verhältnisfaktor die Variation des einen oder der mehreren domänenanpassbaren Merkmale von einem alten Zustand zu einem neuen Zustand darstellt, wobei der Verhältnisfaktor als eine Ausgabe eines Domänenwissensextraktors mit einer Trendanalyse in Bezug auf die Domäneneigenschaft und die probabilistische Eigenschaft bestimmt wird; und
Erzeugen von Ausgabedaten in der Zieldomäne basierend auf den identifizierten Variationen in jedem des einen oder der mehreren domänenanpassbaren Merkmale unter Verwendung eines auf einem neuronalen Netzwerk basierenden Modells, wobei die Ausgabedaten mindestens eine Änderung in der Zieldomäne widerspiegeln, wobei die mindestens eine Änderung in der Zieldomäne mit einer Anpassung der identifizierten Variationen des einen oder der mehreren domänenanpassbaren Merkmale in der Quelldomäne assoziiert ist, wobei das auf einem neuronalen Netzwerk basierende Modell, das eine vordefinierte Menge von Quelldomänendaten als Eingabe nimmt, Zielfunktionen mit einer oder mehreren Regularisierungen optimiert, um Verluste oder Fehler in Bezug auf das eine oder die mehreren domänenanpassbaren Merkmale zu minimieren, wobei eine Verlustfunktion definiert ist als: $Verlust = {MSE}_{Verlust} \left(x,x′\right) + {KLD}_{Verlust} + {\sum }_{i = 1}^{n} MSE \left({f}_{i}∗{DAF}_{i}\left(x\right),{DAF}_{i}\left(x′\right)\right)$
wobei *x* die Eingabedaten sind, *x*' rekonstruierte Daten sind, MSE ein mittlerer quadratischer Fehlerverlust ist, *KLD_{Verlust}* K-L-Divergenzverlust ist, *fᵢ* der Faktor des domänenanpassbaren Merkmals ist (*DAFᵢ*). ${DAF}_{i} = > FFT , FM 4$
wobei die Reduzierung der FFT und der Gütezahl, FM4, in Bezug auf die Quelldomäne und die erzeugte Zieldomäne ist, wobei das auf einem neuronalen Netzwerk basierende Modell ein Variationsautocodierer mit einer modifizierten Optimierungsfunktion ist, um das eine oder die mehreren domänenanpassbaren Merkmale anzupassen, um die Verlustfunktion gegenüber Eingabe- und erzeugten Ausgabedaten für die Zieldomäne zu minimieren,
wobei das eine oder die mehreren domänenanpassbaren Merkmale eine maximale Spitzenamplitude der FFT, eine Leistungsspektraldichte, die auf der FFT der Maschinenvibrationsdaten abgeleitet ist, Momente basierend auf einem Differenzsignal wie etwa FM4 4· Ordnung beinhalten und der Normalzustand der Maschine eine Eingabedomäne ist und ein fehlgeschlagener Zahnfehler zu neuen Zuständen als eine Ausgabedomäne fortgeschritten ist.

## Revendications

1. Procédé mis en œuvre par processeur (500) comprenant :
la réception (502), via une ou plusieurs interfaces d'entrée/sortie, d'une quantité prédéfinie de données d'entrée provenant d'un domaine source, dans lequel le domaine source est dans un état normal d'une machine, dans lequel l'état normal consiste en un ensemble de caractéristiques avec une certaine plage de valeurs, dans lequel la quantité prédéfinie de données d'entrée est de nature multivariée ;
l'analyse (504), via un ou plusieurs processeurs matériels, des données d'entrée reçues pour déterminer une ou plusieurs caractéristiques d'une propriété de domaine par rapport au domaine source et à un domaine cible, dans lequel les une ou plusieurs caractéristiques de la propriété de domaine comprennent une propriété basée sur la physique qui est une rigidité, une propriété statistique, et une propriété probabiliste, dans lequel le domaine cible est un changement d'état défini par un ensemble de caractéristiques de contexte et dans lequel le domaine cible est un état de progression de défaut, dans lequel une gravité de défaut associée à la rigidité augmente progressivement, et la mesure d'un changement de la rigidité impactant différentes caractéristiques statistiques telles qu'une amplitude maximale de la transformée de Fourier rapide, FFT, calculée à partir des données de vibration de la machine ;
l'identification (506), via les un ou plusieurs processeurs matériels, d'une variation dans chacune d'une ou plusieurs caractéristiques adaptables au domaine associées à des facteurs de variation appliqués sur le domaine source pour représenter les une ou plusieurs caractéristiques adaptables au domaine correspondantes dans le domaine cible sur la base des une ou plusieurs caractéristiques déterminées de la propriété de domaine, dans lequel la variation des une ou plusieurs caractéristiques adaptables au domaine est obtenue en mettant en correspondance la propriété basée sur la physique du domaine source avec la propriété statistique et probabiliste du domaine source ;
la détermination, via les un ou plusieurs processeurs matériels, d'un facteur de rapport pour exprimer la variation dans chacune des une ou plusieurs caractéristiques adaptables au domaine, dans lequel le facteur de rapport représente la variation des une ou plusieurs caractéristiques adaptables au domaine d'un ancien état à un nouvel état, dans lequel le facteur de rapport est déterminé comme une sortie d'un extracteur de connaissances de domaine ayant une analyse de tendance relative à la propriété de domaine et à la propriété probabiliste ; et
la génération (508), via les un ou plusieurs processeurs matériels, de données de sortie dans le domaine cible sur la base des variations identifiées dans chacune des une ou plusieurs caractéristiques adaptables au domaine en utilisant un modèle basé sur un réseau neuronal, dans lequel les données de sortie reflètent au moins un changement sur le domaine cible, dans lequel l'au moins un changement dans le domaine cible est associé à une adaptation des variations identifiées des une ou plusieurs caractéristiques adaptables au domaine dans le domaine source, dans lequel le modèle basé sur un réseau neuronal prenant une quantité prédéfinie de données de domaine source comme entrée optimise des fonctions objectif avec un ou plusieurs termes de régularisation pour minimiser des pertes ou des erreurs en termes des une ou plusieurs caractéristiques adaptables au domaine, dans lequel une fonction de perte est définie comme : $Perte = {MSE}_{Perte} \left(x,x′\right) + {KLD}_{Perte} + {\sum }_{i = 1}^{n} MSE \left({f}_{i}∗{DAF}_{i}\left(x\right),{DAF}_{i}\left(x′\right)\right)$
dans lequel, *x* est les données d'entrée, *x'* est des données reconstruites, MSE est une perte d'erreur quadratique moyenne, *KLD_{Perte}* est une perte de divergence K-L, *fᵢ* est le facteur de caractéristique adaptable au domaine (*DAFᵢ*). ${DAF}_{i} = > FFT , FM 4$
dans lequel la réduction de la FFT et de la figure de mérite, FM4, par rapport au domaine source et au domaine cible généré, dans lequel le modèle basé sur un réseau neuronal est un auto-codeur variationnel avec une fonction d'optimisation modifiée pour adapter les une ou plusieurs caractéristiques adaptables au domaine pour minimiser la fonction de perte par rapport aux données d'entrée et de sortie générées pour le domaine cible,
dans lequel les une ou plusieurs caractéristiques adaptables au domaine incluent une amplitude de crête maximale de la FFT, une densité spectrale de puissance obtenue à partir de la FFT des données de vibration de la machine, des moments basés sur un signal de différence tel que le FM4 de 4^{ème} ordre, et l'état normal de la machine est un domaine d'entrée et un défaut de dent ébréchée a progressé vers de nouveaux états en tant que domaine de sortie.

2. Système (100) comprenant :
une interface d'entrée/sortie (104) pour recevoir une quantité prédéfinie de données d'entrée provenant d'un domaine source, dans lequel le domaine source est dans un état normal d'une machine, dans lequel l'état normal consiste en un ensemble de caractéristiques avec une certaine plage de valeurs, dans lequel la quantité prédéfinie de données d'entrée est de nature multivariée ;
une mémoire (110) en communication avec les un ou plusieurs processeurs matériels (108), dans lequel les un ou plusieurs processeurs matériels (108) sont configurés pour exécuter des instructions programmées stockées dans la mémoire pour :
analyser les données d'entrée reçues pour déterminer une ou plusieurs caractéristiques d'une propriété de domaine par rapport au domaine source et à un domaine cible, dans lequel les une ou plusieurs caractéristiques de la propriété de domaine comprennent une propriété basée sur la physique qui est une rigidité, une propriété statistique, et une propriété probabiliste, dans lequel le domaine cible est un changement d'état défini par un ensemble de caractéristiques de contexte et dans lequel le domaine cible est un état de progression de défaut, dans lequel une gravité de défaut associée à la rigidité augmente progressivement, et la mesure d'un changement de la rigidité impactant différentes caractéristiques statistiques telles qu'une amplitude maximale de la transformée de Fourier rapide, FFT, calculée à partir des données de vibration de la machine ;
identifier une variation dans chacune d'une ou plusieurs caractéristiques adaptables au domaine associées à des facteurs de variation appliqués sur le domaine source pour représenter les une ou plusieurs caractéristiques adaptables au domaine correspondantes dans le domaine cible sur la base des une ou plusieurs caractéristiques déterminées de la propriété de domaine, dans lequel la variation des une ou plusieurs caractéristiques adaptables au domaine est obtenue en mettant en correspondance la propriété basée sur la physique du domaine source avec la propriété statistique et probabiliste du domaine source ;
déterminer un facteur de rapport pour exprimer la variation dans chacune des une ou plusieurs caractéristiques adaptables au domaine, dans lequel le facteur de rapport représente la variation des une ou plusieurs caractéristiques adaptables au domaine d'un ancien état à un nouvel état, dans lequel le facteur de rapport est déterminé comme une sortie d'un extracteur de connaissances de domaine ayant une analyse de tendance relative à la propriété de domaine et à la propriété probabiliste ; et
générer des données de sortie dans le domaine cible sur la base des variations identifiées dans chacune des une ou plusieurs caractéristiques adaptables au domaine en utilisant un modèle basé sur un réseau neuronal, dans lequel les données de sortie reflètent au moins un changement sur le domaine cible, dans lequel l'au moins un changement dans le domaine cible est associé à une adaptation des variations identifiées des une ou plusieurs caractéristiques adaptables au domaine dans le domaine source, dans lequel le modèle basé sur un réseau neuronal prenant une quantité prédéfinie de données de domaine source comme entrée optimise des fonctions objectif avec un ou plusieurs termes de régularisation pour minimiser des pertes ou des erreurs en termes des une ou plusieurs caractéristiques adaptables au domaine, dans lequel une fonction de perte est définie comme : $Perte = {MSE}_{Perte} \left(x,x′\right) + {KLD}_{Perte} + {\sum }_{i = 1}^{n} MSE \left({f}_{i}∗{DAF}_{i}\left(x\right),{DAF}_{i}\left(x′\right)\right)$
dans lequel, *x* est les données d'entrée, *x'* est des données reconstruites, MSE est une perte d'erreur quadratique moyenne, *KLD_{Perte}* est une perte de divergence K-L, *fᵢ* est le facteur de caractéristique adaptable au domaine (*DAFᵢ*). ${DAF}_{i} = > FFT , FM 4$
dans lequel la réduction de la FFT et de la figure de mérite, FM4, par rapport au domaine source et au domaine cible généré, dans lequel le modèle basé sur un réseau neuronal est un auto-codeur variationnel avec une fonction d'optimisation modifiée pour adapter les une ou plusieurs caractéristiques adaptables au domaine pour minimiser la fonction de perte, par rapport aux données d'entrée et de sortie générées pour le domaine cible,
dans lequel les une ou plusieurs caractéristiques adaptables au domaine incluent une amplitude de crête maximale de la FFT, une densité spectrale de puissance obtenue à partir de la FFT des données de vibration de la machine, des moments basés sur un signal de différence tel que le FM4 de 4^{ème} ordre, et l'état normal de la machine est un domaine d'entrée et un défaut de dent ébréchée a progressé vers de nouveaux états en tant que domaine de sortie.

3. Un ou plusieurs supports de stockage d'informations lisibles par machine non transitoires comprenant une ou plusieurs instructions qui, lorsqu'elles sont exécutées par un ou plusieurs processeurs matériels, amènent :
la réception, via une ou plusieurs interfaces d'entrée/sortie, d'une quantité prédéfinie de données d'entrée provenant d'un domaine source, dans lequel le domaine source est dans un état normal d'une machine, dans lequel l'état normal consiste en un ensemble de caractéristiques avec une certaine plage de valeurs, dans lequel la quantité prédéfinie de données d'entrée est de nature multivariée ;
l'analyse des données d'entrée reçues pour déterminer une ou plusieurs caractéristiques d'une propriété de domaine par rapport au domaine source et à un domaine cible, dans lequel les une ou plusieurs caractéristiques de la propriété de domaine comprennent une propriété basée sur la physique qui est une rigidité, une propriété statistique, et une propriété probabiliste, dans lequel le domaine cible est un changement d'état défini par un ensemble de caractéristiques de contexte et dans lequel le domaine cible est un état de progression de défaut, dans lequel une gravité de défaut associée à la rigidité augmente progressivement, et la mesure d'un changement de la rigidité impactant différentes caractéristiques statistiques telles qu'une amplitude maximale de la transformée de Fourier rapide, FFT, calculée à partir des données de vibration de la machine ;
l'identification d'une variation dans chacune d'une ou plusieurs caractéristiques adaptables au domaine associées à des facteurs de variation appliqués sur le domaine source pour représenter les une ou plusieurs caractéristiques adaptables au domaine correspondantes dans le domaine cible sur la base des une ou plusieurs caractéristiques déterminées de la propriété de domaine, dans lequel la variation des une ou plusieurs caractéristiques adaptables au domaine est obtenue en mettant en correspondance la propriété basée sur la physique du domaine source avec la propriété statistique et probabiliste du domaine source ;
la détermination d'un facteur de rapport pour exprimer la variation dans chacune des une ou plusieurs caractéristiques adaptables au domaine, dans lequel le facteur de rapport représente la variation des une ou plusieurs caractéristiques adaptables au domaine d'un ancien état à un nouvel état, dans lequel le facteur de rapport est déterminé comme une sortie d'un extracteur de connaissances de domaine ayant une analyse de tendance relative à la propriété de domaine et à la propriété probabiliste ; et
la génération de données de sortie dans le domaine cible sur la base des variations identifiées dans chacune des une ou plusieurs caractéristiques adaptables au domaine en utilisant un modèle basé sur un réseau neuronal, dans lequel les données de sortie reflètent au moins un changement sur le domaine cible, dans lequel l'au moins un changement dans le domaine cible est associé à une adaptation des variations identifiées des une ou plusieurs caractéristiques adaptables au domaine dans le domaine source, dans lequel le modèle basé sur un réseau neuronal prenant une quantité prédéfinie de données de domaine source comme entrée optimise des fonctions objectif avec un ou plusieurs termes de régularisation pour minimiser des pertes ou des erreurs en termes des une ou plusieurs caractéristiques adaptables au domaine, dans lequel une fonction de perte est définie comme : $Perte = {MSE}_{Perte} \left(x,x′\right) + {KLD}_{Perte} + {\sum }_{i = 1}^{n} MSE \left({f}_{i}∗{DAF}_{i}\left(x\right),{DAF}_{i}\left(x′\right)\right)$
dans lequel, *x* est les données d'entrée, *x'* est des données reconstruites, MSE est une perte d'erreur quadratique moyenne, *KLD_{Perte}* est une perte de divergence K-L, *fᵢ* est le facteur de caractéristique adaptable au domaine (*DAFᵢ*). ${DAF}_{i} = > FFT , FM 4$
dans lequel la réduction de la FFT et de la figure de mérite, FM4, par rapport au domaine source et au domaine cible généré, dans lequel le modèle basé sur un réseau neuronal est un auto-codeur variationnel avec une fonction d'optimisation modifiée pour adapter les une ou plusieurs caractéristiques adaptables au domaine pour minimiser la fonction de perte par rapport aux données d'entrée et de sortie générées pour le domaine cible,
dans lequel les une ou plusieurs caractéristiques adaptables au domaine incluent une amplitude de crête maximale de la FFT, une densité spectrale de puissance obtenue à partir de la FFT des données de vibration de la machine, des moments basés sur un signal de différence tel que le FM4 de 4^{ème} ordre, et l'état normal de la machine est un domaine d'entrée et un défaut de dent ébréchée a progressé vers de nouveaux états en tant que domaine de sortie.
